# EUROPÄISCHE PATENTSCHRIFT

(11) **EP 4 111 838 B1**
(45) Veröffentlichungstag und Bekanntmachung des Hinweises auf die Patenterteilung: **14.08.2024**
(21) Anmeldenummer: 22177703.0
(22) Anmeldetag: 08.06.2022
(51) Int. Cl.: A01B 33/02, A01B 35/06, A01B 49/02

(54) **BODENBEARBEITUNGSGERAET ZUR ULTRAFLACHEN BODENBEARBEITUNG**
SOIL WORKING DEVICE FOR ULTRA-FLAT SOIL WORKING
APPAREIL DE TRAITEMENT DU SOL DESTINÉ AU TRAITEMENT ULTRAPLAT DU SOL

(30) Priorität: 29.06.2021 DE 102021116697
(43) Veröffentlichungstag der Anmeldung: 04.01.2023
(73) Patentinhaber: Amazonen-Werke H. Dreyer SE & Co. KG, 49205 Hasbergen (DE)
(72) Erfinder: SCHERF, Silvio, 39444 Hecklingen OT Cochstedt (DE); WOLFRUM, Thomas, 04229 Leipzig (DE)

(56) Entgegenhaltungen:
- DE-A1- 102016 208 413
- DE-A1- 102017 116 633
- DE-A1- 3 541 543
- DE-B3- 102014 104 417

## Beschreibung

Die Erfindung betrifft ein Bodenbearbeitungsgerät, welches anhand seiner Anordnung von Arbeitswerkzeugen zur ultraflachen Bodenbearbeitung vorgesehen ist, gemäß dem Patentanspruch 1.

Die DE 35 41 543 A1 offenbart ein Bodenbearbeitungsgerät mit tiefenlockernder Arbeitsweise, welches an seinem hinteren Ende eine lösbar angeordnete, die Bearbeitungstiefe regelnde, die Gewichtskraft des Bodenbearbeitungsgerätes ausschließlich tragende und der Bodenrückfestigung dienende Bodenwalze aufweist.

Die DE 10 2014 104417 B3 offenbart ebenfalls ein Bodenbearbeitungsgerät mit tiefenlockernder Arbeitsweise, nämlich mit einem sich selbst in den Boden einziehenden zweireihigen Scheibenfeld. Das Bodenbearbeitungsgerät umfasst ferner eine Nachlaufwalze, welche höhenverstellbar ist und somit zur Tiefenführung entgegen der Einzugskraft des Scheibenfeldes dient. Ferner offenbart die DE 10 2017 116 633 A1 eine zweireihige Scheibenegge, wobei die Arbeitstiefenanpassung vereinfacht ist.

Die DE 10 2016 208 413 A1 offenbart eine zweireihige Nachlaufwalze für einen Grubber oder eine Scheibenegge, welche dazu eingerichtet ist, große Hindernisse zu überfahren.

Es sind Bodenbearbeitungsgeräte zur ultraflachen Bodenbearbeitung bekannt, die einen sich in Arbeitsstellung quer zur Fahrtrichtung erstreckenden Rahmen umfassen, welcher zumindest zwei Arbeitssegmente aufweist. An seinem vorderen Ende kann der Rahmen in bekannter Weise eine Anbauvorrichtung aufweisen, so dass das Bodenbearbeitungsgerät an eine landwirtschaftliche Zugmaschine angebaut werden kann, um es für die Arbeit über landwirtschaftliche Nutzflächen oder zum Transport über Verkehrswege zu verbringen.

Derartige Bodenbearbeitungsgeräte können ein Fahrwerk zumindest für den Transport aufweisen. Die zumindest zwei Arbeitssegmente sind gebildet durch eine Abfolge von zumindest zwei Arbeitswerkzeugen, welche die ultraflache Bodenbearbeitung verrichten indem sich das Bodenbearbeitungsgerät während der Arbeit auf den Arbeitswerkzeugen abstützt. Das in Fahrtrichtung vordere Arbeitswerkzeug kann als Vorlaufwerkzeug und das in Fahrtrichtung auf das Vorlaufwerkzeug folgende Arbeitswerkzeug als Nachlaufwerkzeug bezeichnet werden.

Das Arbeitsergebnis ist dabei davon abhängig wie viel Gewichtskraft sich auf den einzelnen Arbeitswerkzeugen, also auf dem Vorlaufwerkzeug und/oder dem Nachlaufwerkzeug, abstützt. Ferner ist entscheidend, wie das Vorlaufwerkzeug und/oder das Nachlaufwerkzeug ausgeführt sind. Je nach Kombination von Vor- und Nachlaufwerkzeug kann eine variable Gewichtsverteilung für ein optimales Arbeitsergebnis erforderlich sein.

Es besteht der Bedarf derartige Bodenbearbeitungsgeräte hinsichtlich ihrer Arbeitsweise zu verbessern. Insbesondere soll ein Bodenbearbeitungsgerät mit einer verbesserten Einstellung der Arbeitswerkzeuge geschaffen werden. Vorzugsweise ist ein Bodenbearbeitungsgerät mit einer vorteilhaften Kombination von Vorlaufwerkzeug und Nachlaufwerkzeug zu schaffen.

Diese Aufgaben werden durch ein Bodenbearbeitungsgerät mit den Merkmalen des Anspruchs 1 gelöst. Weitere vorteilhafte Ausgestaltungen sind in den abhängigen Ansprüchen angeben.

Zur Lösung der genannten Aufgaben sieht die Erfindung ein Bodenbearbeitungsgerät vor. Das Bodenbearbeitungsgerät kann sowohl ein gezogenes oder im Dreipunktkraftheber einer Zugmaschine angebautes Bodenbearbeitungsgerät sein. Das Bodenbearbeitungsgerät umfasst einen sich in Arbeitsstellung quer zur Fahrrichtung erstreckenden Rahmen, der zumindest zwei Arbeitssegmente aufweist. Ein Arbeitssegment ist gebildet durch eine Abfolge von zumindest zwei Arbeitswerkzeugen zur Bodenbearbeitung. Die Arbeitswerkzeuge können, vorzugsweise über Lagervorrichtungen, am Rahmen angeordnet sein. Das Bodenbearbeitungsgerät stützt sich während der Arbeit auf die zumindest zwei Arbeitswerkzeuge der zumindest zwei Arbeitssegmente ab. Das Bodenbearbeitungsgerät kann für Transportfahrten ein Fahrwerk aufweisen, auf dem das Bodenbearbeitungsgerät abgestützt werden kann. Vorzugsweise stützt sich das Bodenbearbeitungsgerät während der Arbeit jedoch ausschließlich auf Arbeitswerkzeugen ab. Zumindest ein Arbeitswerkzeug ist als Vorlaufwerkzeug zum Lockern des Bodens und/oder Schneiden von Ernteresten ausgeführt. Zumindest ein in Fahrtrichtung auf das Vorlaufwerkzeug folgendes Arbeitswerkzeug ist als Nachlaufwerkzeug zur Rückverfestigung des Bodens und/oder Einebnen von Ernteresten ausgeführt. Die Vorlaufwerkzeuge und die Nachlaufwerkzeuge weisen eine quer zur Fahrtrichtung rotierende, walzende oder striegelnde Arbeitsweise auf, so dass diese sich, entgegen von tiefenlockernden Arbeitswerkzeugen, im Wesentlichten nicht durch die Gewichtskraft des Bodenbearbeitungsgerätes selbst in den Boden einziehen sondern eine ultraflache Bodenbearbeitung gewährleisten. Das Bodenbearbeitungsgerät umfasst eine Spannvorrichtung zur einstellbaren Verteilung der Gewichtskraft des Bodenbearbeitungsgerätes, insbesondere während der Arbeit, zwischen dem Vorlaufwerkzeug und dem Nachlaufwerkzeug.

Durch die Ausführung des Vorlaufwerkzeuges als Boden lockerndes und/oder Erntereste schneidendes Arbeitswerkzeug und des Nachlaufwerkzeuges als Boden rückverfestigendes und/oder Erntereste einebnendes Arbeitswerkzeug ist eine vorteilhafte Kombination für die Arbeitssegmente geschaffen. Besonders wenn die Erntereste erst geschnitten und dann eingeebnet werden ist die Rotte in vorteilhafter Weise beschleunigt. Mittels der Spannvorrichtung ist einstellbar welcher Anteil der Gewichtskraft sich auf das Vorlaufwerkzeug und auf das Nachlaufwerkzeug verteilt, so dass je nach Ausführung der Arbeitswerkzeuge ihre Arbeitsweise gewählt und aufeinander abgestimmt werden kann. Die Gewichtskraft des Bodenbearbeitungsgerätes ist auf das Vorlaufwerkzeug und das Nachlaufwerkzeug anteilig verteilt, wobei die Einstellung mittels der Spannvorrichtung derart erfolgen kann, dass eines der Arbeitswerkzeuge, also Vorlaufwerkzeug oder Nachlaufwerkzeug, mit der gesamten Gewichtskraft beaufschlagt ist.

In einer vorteilhaften Weiterbildung des erfindungsgemäßen Bodenbearbeitungsgerätes sind zumindest zwei Spannvorrichtungen vorgesehen, wobei jedem Arbeitssegment zumindest eine Spannvorrichtung zugeordnet ist. Die Verteilung der Gewichtskraft ist somit für jedes Arbeitssegment separat einstellbar. Ein Arbeitssegment kann mehrere Spannvorrichtungen aufweisen, die quer zur Fahrtrichtung beabstandet zueinander angeordnet sein können. So können Spannvorrichtungen unterschiedlicher Arbeitssegmente, insbesondere unmittelbar, benachbart zueinander angeordnet sein.

In einer weiteren besonders vorteilhaften Weiterbildung des erfindungsgemäßen Bodenbearbeitungsgerätes ist vorgesehen, dass die Spannvorrichtung zwischen dem Rahmen und dem Vorlaufwerkzeug angeordnet ist. Vorzugsweise wirkt die Spannvorrichtung ausschließlich auf das Vorlaufwerkzeug des jeweiligen Arbeitssegments. Der Anteil der auf das Vorlaufwerkzeug wirkenden Gewichtskraft des Bodenbearbeitungsgerätes kann mittels der Spannvorrichtung, vorzugsweise zwischen zumindest annährend 0 % und zumindest annährend 100 %, besonders vorzugsweise zwischen 25 % und 100 %, einstellbar sein. Alternativ ist denkbar, dass die Spannvorrichtung zwischen dem Rahmen und dem Nachlaufwerkzeug angeordnet ist und vorzugsweise ausschließlich auf das Nachlaufwerkzeug wirkt.

In einer weiteren vorteilhaften Ausführungsform des erfindungsgemäßen Bodenbearbeitungsgerätes ist die Spannvorrichtung dazu eingerichtet, eine elastische Übertragungskraft auf zumindest ein Arbeitswerkzeug, vorzugsweise auf das Vorlaufwerkzeug, zu erzeugen, dass die Gewichtskraft des Bodenbearbeitungsgerätes in Abhängigkeit von der Höhe der Übertragungskraft auf das Vorlaufwerkzeug und das Nachlaufwerkzeug verteilt ist. Der Anteil der auf das durch die Übertragungskraft vorgespannte Arbeitswerkzeug, vorzugsweise das Vorlaufwerkzeug, wirkenden Gewichtskraft kann mit der Höhe der Übertragungskraft ansteigen. Mit abnehmender Übertragungskraft verteilt sich dann mehr Gewicht auf das nicht unter dem Einfluss der Übertragungskraft stehende Arbeitswerkzeug, vorzugsweise das Nachlaufwerkzeug.

Die Spannvorrichtung kann eine Einstellvorrichtung und einen mit der Einstellvorrichtung zusammenwirkenden Aktuator zur Erzeugung der elastischen Übertragungskraft umfassen. Der Aktuator kann ein Hydraulikzylinder sein, wobei die Einstellvorrichtung zumindest ein ansteuerbares Ventil umfasst. Der Aktuator kann ein Federpaket sein, wobei mittels der Einstellvorrichtung die Federkraft einstellbar ist. Ebenso kann der Aktuator ein Elastomer sein, wobei mittels der Einstellvorrichtung die Vorspannung des Elastomer einstellbar ist. Vorzugsweise ist der als Elastomer ausgeführte Aktuator oder über den Elastomer verbundene Bauteile mittels der Einstellvorrichtung, insbesondere gegeneinander verdrehbar, so dass sich eine von einem Verdrehwinkel abhängige Vorspannkraft ergibt. Ein als Elastomer ausgeführter Aktuator kann Teil einer elastischen Lagervorrichtung sein, wobei das unter der Übertragungskraft stehende Arbeitswerkzeug, vorzugsweise das Vorlaufwerkzeug, über die elastische Lagervorrichtung an dem Rahmen angeordnet sein kann.

In einer vorteilhaften Weiterbildung ist vorgesehen, dass die Einstellvorrichtung als absteckbare Lochkulisse ausgeführt ist und/oder der Aktuator als Federpaket, vorzugsweise mit zumindest einem Tiefenanschlag, ausgeführt ist. Die Lochkulisse kann eine Mehrzahl absteckbarer Vorspannbohrungen aufweisen, wobei in Abhängigkeit der gewählten Vorspannbohrung die Übertragungskraft einstellbar ist. Insbesondere ist durch die Wahl der abgesteckten Vorspannbohrung die Federkraft des als Federpaket ausgeführten Aktuators einstellbar, indem der Federweg über die Wahl der Vorspannbohrung variiert wird. Der Tiefenanschlag kann als Langloch in einer sich in Längsrichtung des Federpakets erstreckenden Strebe ausgeführt sein.

In einer weiteren vorteilhaften Ausführungsform des erfindungsgemäßen Bodenbearbeitungsgerätes sind die Arbeitssegmente mittels in Fahrtrichtung weisender Schwenkachsen aufweisenden Scharnieren miteinander und/oder mit dem Rahmen gekoppelt. Der Rahmen kann einen Mittelrahmen aufweisen an dem mittels Scharnieren zwei Arbeitssegmente schwenkbar angeordnet sind. Alternativ oder zusätzlich können die Arbeitssegmente direkt über Scharniere miteinander schwenkbar gekoppelt sein. Die Arbeitssegmente sind anhand der Scharniere dazu eingerichtet, sich quer zur Fahrtrichtung der Bodenkontur anzupassen. Die Arbeitssegmente können über die Scharniere Bodenunebenheiten quer zur Fahrtrichtung ausgleichen indem sie zumindest teilweise um die Schwenkachsen verschwenken. Die auf den Arbeitswerkzeugen der Arbeitssegmente lastende Gewichtskraft kann dazu beitragen, dass die Arbeitssegmente sich mittels der Scharniere der Bodenkontur anpassen.

Das erfindungsgemäße Bodenbearbeitungsgerät ist ferner vorteilhaft dadurch weitergebildet, dass in Fahrtrichtung vor dem Vorlaufwerkzeug ein weiteres, als Vorbearbeitungswerkzeug ausgeführtes Arbeitswerkzeug angeordnet ist. Das Vorbearbeitungswerkzeug kann als Messerwalze, Scheibenwalze, Crushboard oder Scheibeneinheit mit einer Mehrzahl von Scheiben ausgeführt sein. Auf dem Boden vorhandene Erntereste oder der Boden selbst können durch das Vorbearbeitungswerkzeug für Bearbeitung durch das Vorlaufwerkzeug und/oder das Nachlaufwerkzeug präpariert werden. Es kann jedem Arbeitssegment ein Vorbearbeitungswerkzeug zugeordnet sein. Das Vorbearbeitungswerkzeug kann die Arbeitssegmente übergreifend ausgeführt und am Rahmen angeordnet sein. Vorzugsweise weist das Vorbearbeitungswerkzeug zumindest eine quer zur Fahrtrichtung liegende Rotationsachse auf. Das Vorbearbeitungswerkzeug kann mittels einer quer zur Fahrrichtung liegenden Schwenkachse gegenüber dem Rahmen und/oder dem Vorlaufwerkzeug in vertikaler Richtung schwenkbar sein.

In einer weiteren vorteilhaften Weiterbildung des erfindungsgemäßen Bodenbearbeitungsgerätes ist vorgesehen, dass die Spannvorrichtung dazu eingerichtet, die eingestellte Verteilung der Gewichtskraft auf das Vorlaufwerkzeug und das Nachlaufwerkzeug bei Variation der Arbeitstiefe, Auftreffen auf ein Hindernis und/oder Verschleiß des Vorlaufwerkzeuges und/oder Nachlaufwerkzeuges zumindest annährend konstant zu halten. Infolge dieser Weiterbildung wird ein besonders homogenes Arbeitsergebnis erzielt. Wesentliche Einflüsse auf das Arbeitsergebnis werden zumindest annährend aufgehoben, so dass sie sich nicht negativ auswirken. Vorzugsweise ist der Aktuator als Federpaket ausgeführt, wobei das Federpaket derart angeordnet ist, dass eine Variation der Arbeitstiefe, Auftreffen auf ein Hindernis und/oder Verschleiß des des Vorlaufwerkzeuges und/oder Nachlaufwerkzeuges die Federkraft zumindest annährend nicht beeinflussen. Der Federweg des Federpakets ist somit zumindest annährend konstant bei Variation der Arbeitstiefe, Auftreffen auf ein Hindernis und/oder Verschleiß des Vorlaufwerkzeuges und/oder Nachlaufwerkzeuges. Vorzugsweise ist die Spannvorrichtung derart zwischen dem Rahmen und dem Vorlaufwerkzeug angeordnet, dass vorstehende Änderungen die Spannvorrichtung nicht beeinflussen. Insbesondere beeinflusst der Verschleiß des Nachlaufwerkzeuges die Spannvorrichtung dann nicht, wenn die Spannvorrichtung zwischen dem Rahmen und dem Vorlaufwerkzeug angeordnet ist.

Um das Vorlaufwerkzeug besonders tragfähig zu gestalten, ist in einer weiteren vorteilhaften Weiterbildung vorgesehen, dass das Vorlaufwerkzeug als Tandemanordnung ausgeführt ist. Die Tandemanordnung kann zwei quer zur Fahrtrichtung liegende Drehachsen aufweisen. Da das Vorlaufwerkzeug in Fahrtrichtung vor dem Nachlaufwerkzeug auf den zu bearbeitenden Boden trifft erfährt es in der Regel einen höheren Widerstand, welche ausgeglichen werden kann durch eine gesteigerte Verteilung der Gewichtskraft auf das Vorlaufwerkzeug. Infolge der Ausführung des Vorlaufwerkzeuges als Tandemanordnung führt diese Maßnahme wiederum nicht dazu, dass das Vorlaufwerkzeug zu stark in den Boden eingreift, da eine Tandemanordnung die Belastung besonders gut zu verteilen vermag.

In einer besonders vorteilhaften Weiterbildung ist vorgesehen, dass die Tandemanordnung zumindest zwei jeweils um eine quer zur Fahrtrichtung liegende Drehachse rotierbare Werkzeugeinheiten umfasst. Die Werkzeugeinheiten können gleichartig ausgeführt sein. Die Werkzeugeinheiten können gebildet sein durch einen um die Drehachse rotierbaren Walzenkörper, der zur Aufnahme einer Mehrzahl von Werkzeugen dient. Die Werkzeuge sind vorzugsweise ringförmig ausgeführt und auf dem Walzenkörper angeordnet.

Das erfindungsgemäße Bodenbearbeitungsgerät ist ferner vorteilhaft dadurch weitergebildet, dass das Nachlaufwerkzeug als Bodenwalze ausgeführt ist. Die Bodenwalze dient zur Rückverfestigung des bearbeiteten Bodens und eignet sich besonders bei der Verwendung eines aggressiv arbeitenden Vorlaufwerkzeuges. Ferner zeichnet sich die Bodenwalze durch seine Tragfähigkeit aus, so dass sie sich ebenfalls zur Kombination mit einem leicht arbeitenden Vorlaufwerkzeug eignet. Insbesondere ist die Bodenwalze geeignet einen vergrößerten Anteil der Gewichtskraft aufzunehmen.

Alternativ zu der vorstehenden Ausführungsform ist das erfindungsgemäße Bodenbearbeitungsgerät vorteilhaft dadurch weitergebildet, dass das Nachlaufwerkzeug als Striegeleinheit mit einer Mehrzahl von Striegeln ausgeführt ist. Die Striegeleinheit kann zumindest zwei, vorzugsweise drei, sich quer zur Fahrtrichtung erstreckende und in Fahrtrichtung beabstandete Reihen von Striegeln aufweisen. Die Striegeleinheit eignet sich zur Einebnung von Ernteresten und beschleunigt die Rotte. Besonders vorteilhaft ist das als Striegeleinheit ausgeführte Nachlaufwerkzeug mit der Spannvorrichtung zur Konstanthaltung der Verteilung der Gewichtskraft insbesondere bei Verschleiß des Nachlaufwerkzeuges zu kombinieren, da die Striegel im Dauereinsatz eine beträchtliche Längenänderung erfahren und somit das Arbeitsergebnis nahezu nicht negativ beeinträchtigt wird.

Weitere Einzelheiten der Erfindung sind der Beispielsbeschreibung und den Zeichnungen zu entnehmen. Die Zeichnungen zeigen
- Fig.1: ein erfindungsgemäßes Bodenbearbeitungsgerät mit einer Abfolge von Arbeitswerkzeugen in Arbeitsstellung in perspektivischer Ansicht,
- Fig.2: eine Spannvorrichtung in Detailansicht,
- Fig.3: das Bodenbearbeitungsgerät gemäß Fig.1 in Heckansicht,
- Fig.4: ein erfindungsgemäßes Bodenbearbeitungsgerät mit alternativen Arbeitswerkzeugen in perspektivischer Detailansicht, und
- Fig.5: ein erfindungsgemäßes Bodenbearbeitungsgerät in schematischer Darstellung.

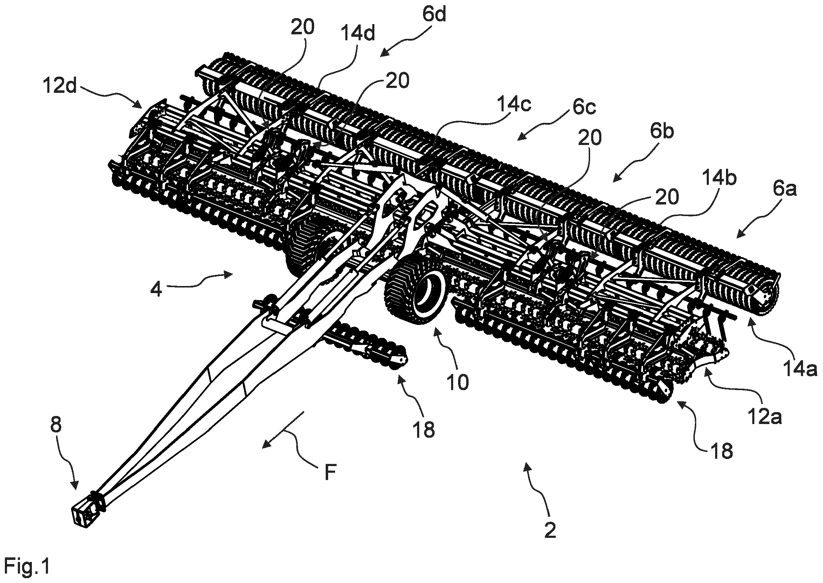

Ein erfindungsgemäßes Bodenbearbeitungsgerät 2 zur ultraflachen Bodenbearbeitung ist in Fig.1 in perspektivischer Ansicht von schräg vorne zu sehen. Das Bodenbearbeitungsgerät 2 befindet sich in Arbeitsstellung in der sich der Rahmen 4 mit vier Arbeitssegmenten 6a - d im Wesentlichen quer zur Fahrtrichtung F erstreckt. Der Rahmen 4 weist an seinem vorderen Ende zudem eine Anbauvorrichtung 8 auf, um das Bodenbearbeitungsgerät 2 an einer nicht dargestellten landwirtschaftlichen Zugmaschine anzuhängen. Zudem ist ein zwei Reifen aufweisendes Fahrwerk 10 zu sehen, welches jedoch in der gezeigten Arbeitsstellung hochgeschwenkt ist, so dass sich das sich das Bodenbearbeitungsgerät 2 ausschließlich auf den Arbeitssegmenten 6a - d abstützt. Das Fahrwerk 10 kann heruntergeschwenkt werden, so dass die Arbeitssegmente 6a - d ausgehoben werden, um das Bodenbearbeitungsgerät 2 zu transportieren oder auch am Vorgewende zu wenden.

Die Arbeitssegmente 6a - d sind gebildet durch eine Abfolge von zwei Arbeitswerkzeugen, nämlich einem Vorlaufwerkzeug 12a - d zum Lockern des Bodens und Schneiden von Ernteresten und einem in Fahrtrichtung F auf das Vorlaufwerkzeug 12a - d folgenden Nachlaufwerkzeug 14a - d zur Rückverfestigung des Bodens und zum Einebnen der Erntereste. Die Nachlaufwerkzeuge 14a - d sind in der in Fig.1 gezeigten Ausführungsform des Bodenbearbeitungsgerätes 2 jeweils als Bodenwalze ausgeführt während die Vorlaufwerkzeuge 12a - d jeweils als Tandemanordnung gestaltet sind. Die Tandemanordnungen umfassen zwei jeweils um eine quer zur Fahrtrichtung F liegende Drehachse D rotierbare, gleichartige Werkzeugeinheiten 16. Die Werkzeugeinheiten 16 sind gebildet durch einen Walzenkörper auf dem eine Mehrzahl von sternartigen Werkzeugen angeordnet ist. Die Werkzeugeinheiten 16 der Tandemanordnungen sind jeweils über Seitenteile, an denen die Drehachsen D aufgenommen sind, gekoppelt und gemeinsam am Rahmen 4 des jeweiligen Arbeitssegementes 6a - d angeordnet.

In Fahrtrichtung vor dem Vorlaufwerkzeug 12a - d ist ein weiteres Arbeitswerkzeug angeordnet, welches als Vorbearbeitungswerkzeug 18 bezeichnet werden kann. Das Vorbearbeitungswerkzeug 18 ist in Fig.1 als Scheibenwalze ausgeführt, also einem Walzenkörper, der um eine quer zur Fahrtrichtung liegende Drehachse rotierbar ist, mit darauf angeordneten Schneidscheiben. Die Vorbearbeitungswerkzeuge 18 sind hier nicht den Arbeitssegmenten 6a - d zugeordnet, sondern separat am Rahmen 4 angeordnet. So teilen sich die Vorbearbeitungswerkzeuge 18 in zwei Außenteile, welche vor den Arbeitssegmenten 6a und 6d, sowie den äußeren Bereichen der Arbeitssegmente 6b und 6c angeordnet sind, und ein Mittelteil, welches in Fahrtrichtung F vor dem Fahrwerk 10, respektive den mittleren Bereichen der Arbeitssegmente 6b und 6c angeordnet ist, so dass die gesamte Arbeitsbreite des Bodenbearbeitungsgerätes 2 durch die Vorbearbeitungswerkzeuge 18 bearbeitet werden kann. Die Vorbearbeitungswerkzeuge 18 können schwenkbar am Rahmen 4 angeordnet sein und durch einen Aktor, vorzugsweise einen Hydraulikzylinder, in Richtung des Bodens vorgespannt werden und/oder außer Bodeneingriff gebracht werden indem sie am Rahmen 4 mittels des Aktors hochgeschwenkt werden.

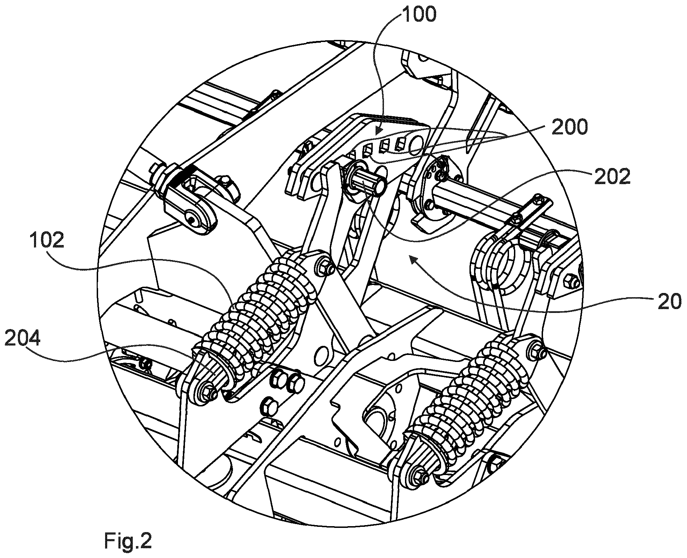

Jedem Arbeitssegment 6a - d ist eine Spannvorrichtung 20 zugeordnet. Die Spannvorrichtung 20 ist in Fig.2 in Detailansicht zu sehen und zur einstellbaren Verteilung der auf den Vorlaufwerkzeugen 12a - d und den Nachlaufwerkzeugen 14a - d lastenden Gewichtskraft des Bodenbearbeitungsgerätes 2 vorgesehen. Die Spannvorrichtung 20 ist jeweils zwischen dem Rahmen 4 des jeweiligen Arbeitssegmentes 6a - d und dem jeweiligen als Tandemanordnung ausgeführten Vorlaufwerkzeug 12a - d angeordnet. Die Spannvorrichtung 20 ist dazu eingerichtet in einstellbarer Weise, eine elastische Übertragungskraft auf das jeweilige Vorlaufwerkzeug 12a - d zu erzeugen, wobei sich die Gewichtskraft des Bodenbearbeitungsgerätes 2 in Abhängigkeit von der Höhe der erzeugten Übertragungskraft auf das Vorlaufwerkzeug 12a - d und das Nachlaufwerkzeug 14a - d verteilt, was im Folgenden näher erläutert werden wird.

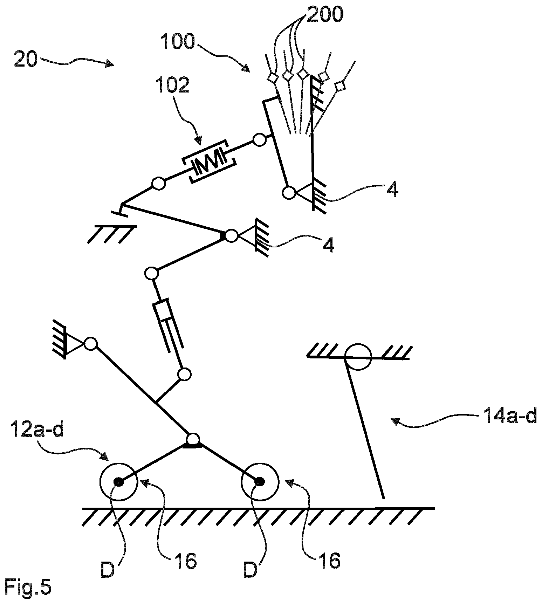

Die Spannvorrichtung 20 umfasst zur Erzeugung der elastischen Übertragungskraft eine als absteckbare Lochkulisse 100 ausgeführte Einstellvorrichtung, sowie einen als Federpaket 102 ausgeführten Aktuator. Die Lochkulisse 100 ist einerseits am Rahmen 4 angeordnet und andererseits mit dem Federpaket 102 gekoppelt und weist eine Mehrzahl absteckbarer, beabstandeter Vorspannbohrungen 200 sowie einen mit den Vorspannbohrungen 200 korrespondierenden Exzenterbolzen 202 auf. Das Federpaket 102 ist wiederum mit dem jeweiligen Vorlaufwerkzeug 12a - d gekoppelt. Über die Position des Exzenterbolzens 202 in den Vorspannbohrungen 200 kann der Federweg des Federpakets 102 variiert werden, so dass in einstellbarer Weise die elastische Übertragungskraft erzeugt wird, die auf das jeweilige Vorlaufwerkzeug 12a - d wirkt. Bei Wahl einer der vorderen Vorspannbohrungen 200 in Fig.2 bzw. linken Vorspannbohrungen 200 in Fig.5 wird eine große Übetragungskraft erzeugt, wodurch ein wesentlicher Anteil der Gewichtskraft des Bodenbearbeitungsgerätes 2 auf die Vorlaufwerkzeuge 12a - d verteilt wird. Je weiter der Exzenterbolzen 202 hinten in eine Vorspannbohrung 200 eingesteckt wird, desto geringer ist die Übertragungskraft auf das Vorlaufwerkzeug 12a - d und desto mehr Gewichtskraft verteilt sich auf die Nachlaufwerkzeuge 14a - d. Die übrige Gewichtskraft verteilt sich auf das jeweils andere Arbeitswerkzeug eines Arbeitssegmentes 6a - d, wobei die Spannvorrichtung 20 dazu eingerichtet ist, die gesamte Gewichtskraft auf das Vorlaufwerkzeug 12a - d oder das Nachlaufwerkzeug 14a - d zu verteilen.

Das Federpaket 102 weist einen als Langloch 204 ausgeführten Tiefenanschlag auf. Bei Auftreffen der Vorlaufwerkzeuge 12a - d auf ein Hindernis kann das Vorlaufwerkzeug 12a - d entgegen der elastischen Übertragungskraft nach oben ausweichen, wobei das Federpaket 102 komprimiert wird. Das in einer das Federpaket 102 in Längsrichtung durchziehenden Strebe angeordnete Langloch 204 ermöglicht dabei die Komprimierung bis das gegenüberliegende Ende das Langlochs 204 erreicht wird.

In Fig.5 ist ein erfindungsgemäßes Bodenbearbeitungsgerät 2 in schematischer Darstellung gezeigt. Zur Vereinfachung der kinematischen Zusammenhänge ist hier nur die Spannvorrichtung 20 mit ihren Verknüpfungen zum Rahmen 4 und den Vorlaufwerkzeugen 12a - d und Nachlaufwerkzeugen 14a - d gezeigt. Wie bereits vorstehend erläutert, lässt sich mittels der als Lochkulisse 100 ausgeführten Einstellvorrichtung der Betrag der auf die Vorlaufwerkzeuge 12a - d wirkenden Übertragungskraft einstellen. Je nach Wahl der Vorspannbohrung 200 kann die von dem als Federpaket 102 ausgeführten Aktuator erzeugte Übertragungskraft variiert werden, wodurch sich mehr Gewichtskraft bei hoher Übertragungskraft oder weniger Gewichtskraft bei geringer Übertragungskraft auf die Vorlaufwerkzeuge 12a - d verteilt. Die übrige Gewichtskraft lastet auf den Nachlaufwerkzeugen 14a - d, welche hier als Striegeleinheit ausgeführt sind. Die eingestellte Verteilung der Gewichtskraft ist hierbei zumindest annährend konstant bei Variation der Arbeitstiefe, nach Auftreffen auf ein Hindernis und/oder Verschleiß der Vorlaufwerkzeuge 12a - d und Nachlaufwerkzeuge 14a - d.

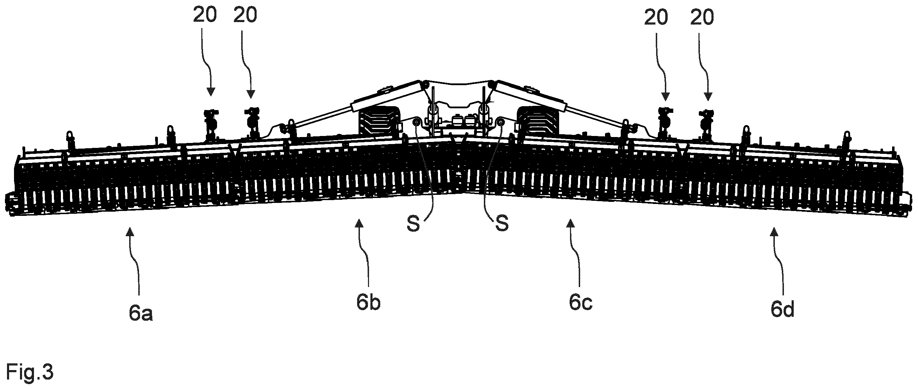

In Fig.3 ist das Bodenbearbeitungsgerät 2 gemäß Fig.1 in Heckansicht zu sehen. Die Arbeitssegmente 6a - d sind mittels in Fahrtrichtung F weisenden Schwenkachsen S aufweisenden Scharnieren am Rahmen 4 angeordnet. Die Arbeitssegmente 6a - d können sich somit quer zur Fahrtrichtung F der Bodenkontur anpassen indem sie unter der Last der Gewichtskraft am Rahmen 4 um die Schwenkachsen S verschwenken. In einer nicht gezeigten Ausführungsform sind die Arbeitssegmente 6a - d ebenfalls miteinander mit derartigen Scharnieren gekoppelt, so dass ein solches Bodenbearbeitungsgerät 2 mit einer weiter verbesserten Konturanpassung geschaffen ist.

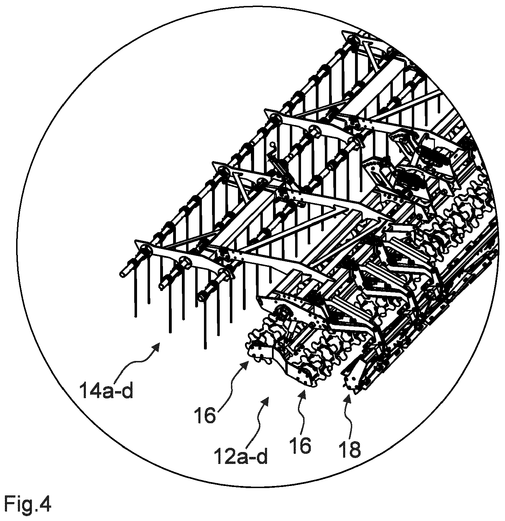

In einer weiteren erfindungsgemäßen Ausführungsform, gezeigt in Fig.4, weist das Bodenbearbeitungsgerät 2 alternative Vorlaufwerkzeuge 12a - d und Nachlaufwerkzeuge 14a - d auf. Die Nachlaufwerkzeuge 14a - d sind hier als Striegeleinheit mit einer Mehrzahl von Striegeln ausgeführt. Je Arbeitssegment 6a - d ist hierbei eine Striegeleinheit vorgesehen, wobei eine Striegeleinheit in insgesamt drei quer zur Fahrtrichtung F hintereinander angeordneten Reihen angeordnete Striegel umfasst. Die Werkzeugeinheiten 16 der als Tandemanordnung ausgeführten Vorlaufwerkzeuge 12a - d sind im Vergleich zu Fig.1 mit anderen Werkzeugen bestückt, nämlich mit zahnradartigen Scheiben. Das Vorbearbeitungswerkzeug 18 ist in dieser Ausführungsform als Messerwalze ausgeführt.

### Bezugszeichenliste

- 2: Bodenbearbeitungsgerät
- 4: Rahmen
- 6a - d: Arbeitssegment
- F: Fahrtrichtung
- 8: Anbauvorrichtung
- 10: Fahrwerk
- 12a - d: Vorlaufwerkzeug
- 14a - d: Nachlaufwerkzeug
- D: Drehachse
- 16: Werkzeugeinheit
- 18: Vorbearbeitungswerkzeug
- 20: Spannvorrichtung
- S: Schwenkachse
- 100: Lochkulisse
- 102: Federpaket
- 200: Vorspannbohrung
- 202: Exzenterbolzen
- 204: Langloch

## Patentansprüche

1. Bodenbearbeitungsgerät (2) zur ultraflachen Bodenbearbeitung, umfassend einen sich in Arbeitsstellung quer zur Fahrrichtung (F) erstreckenden Rahmen (4), der zumindest zwei Arbeitssegmente (6a - d) aufweist, wobei ein Arbeitssegment (6a - d) gebildet ist durch eine Abfolge von zumindest zwei Arbeitswerkzeugen auf die sich das Bodenbearbeitungsgerät (2) während der Arbeit, vorzugsweise ausschließlich, abstützt, wobei zumindest ein Arbeitswerkzeug als Vorlaufwerkzeug (12a - d) zum Lockern des Bodens und/oder Schneiden von Ernteresten und zumindest ein Arbeitswerkzeug als in Fahrtrichtung (F) auf das Vorlaufwerkzeug (12a - d) folgendes Nachlaufwerkzeug (14a - d) zur Rückverfestigung des Bodens und/oder Einebnen der Erntereste ausgeführt ist, **dadurch gekennzeichnet, dass** das Vorlaufwerkzeug (12a - d) und das Nachlaufwerkzeug (14a - d) eine quer zur Fahrtrichtung (F) rotierende, walzende oder striegelnde Arbeitsweise aufweisen, so dass sie eine ultraflache Bodenbearbeitung gewährleisten, wobei das Bodenbearbeitungsgerät (2) zumindest eine Spannvorrichtung (20) umfasst zur einstellbaren Verteilung der Gewichtskraft des Bodenbearbeitungsgerätes (2) zwischen dem Vorlaufwerkzeug (12a - d) und dem Nachlaufwerkzeug (14a - d).

2. Bodenbearbeitungsgerät (2) nach Anspruch 1, **dadurch gekennzeichnet, dass** zumindest zwei Spannvorrichtungen (20) vorgesehen sind, dass jedem Arbeitssegment (6a - d) zumindest eine Spannvorrichtung (20) zugeordnet ist.

3. Bodenbearbeitungsgerät (2) nach Anspruch 2, **dadurch gekennzeichnet, dass** die Spannvorrichtung (20) zwischen dem Rahmen (4) und dem Vorlaufwerkzeug (12a - d) angeordnet ist.

4. Bodenbearbeitungsgerät (2) nach zumindest einem der vorstehenden Ansprüche, **dadurch gekennzeichnet, dass** die Spannvorrichtung (20) dazu eingerichtet ist, eine elastische Übertragungskraft auf zumindest ein Arbeitswerkzeug, vorzugsweise auf das Vorlaufwerkzeug (12a - d), zu erzeugen, dass die Gewichtskraft des Bodenbearbeitungsgerätes (2) in Abhängigkeit von der Höhe der Übertragungskraft auf das Vorlaufwerkzeug (12a - d) und das Nachlaufwerkzeug (14a - d) verteilt ist.

5. Bodenbearbeitungsgerät (2) nach Anspruch 4, **dadurch gekennzeichnet, dass** die Spannvorrichtung (20) eine Einstellvorrichtung (100) und einen mit der Einstellvorrichtung (100) zusammenwirkenden Aktuator (102) zur Erzeugung der elastischen Übertragungskraft umfasst.

6. Bodenbearbeitungsgerät (2) nach Anspruch 5, **dadurch gekennzeichnet, dass** die Einstellvorrichtung (100) als absteckbare Lochkulisse (100) ausgeführt ist und/oder der Aktuator (102) als Federpaket (102), vorzugsweise mit zumindest einem Tiefenanschlag (204), ausgeführt ist.

7. Bodenbearbeitungsgerät (2) nach zumindest einem der vorstehenden Ansprüche, **dadurch gekennzeichnet, dass** die Arbeitssegmente (6a - d) mittels in Fahrtrichtung (F) weisender Schwenkachsen (S) aufweisenden Scharnieren miteinander und/oder mit dem Rahmen (4) gekoppelt sind.

8. Bodenbearbeitungsgerät (2) nach zumindest einem der vorstehenden Ansprüche, **dadurch gekennzeichnet, dass** in Fahrtrichtung (F) vor dem Vorlaufwerkzeug (12a - d) ein weiteres, als Vorbearbeitungswerkzeug (18) ausgeführtes Arbeitswerkzeug angeordnet ist.

9. Bodenbearbeitungsgerät (2) nach zumindest einem der vorstehenden Ansprüche, **dadurch gekennzeichnet, dass** die Spannvorrichtung (20) dazu eingerichtet, die eingestellte Verteilung der Gewichtskraft auf das Vorlaufwerkzeug (12a - d) und das Nachlaufwerkzeug (14a - d) bei Variation der Arbeitstiefe, Auftreffen auf ein Hindernis und/oder Verschleiß des Vorlaufwerkzeuges (12a- d) und/oder Nachlaufwerkzeuges (14a - d) zumindest annährend konstant zu halten.

10. Bodenbearbeitungsgerät (2) nach zumindest einem der vorstehenden Ansprüche, **dadurch gekennzeichnet, dass** das Vorlaufwerkzeug (12a - d) als Tandemanordnung ausgeführt ist.

11. Bodenbearbeitungsgerät (2) nach Anspruch 9, **dadurch gekennzeichnet, dass** die Tandemanordnung zumindest zwei jeweils um eine quer zur Fahrtrichtung (F) liegende Drehachse (D) rotierbare, vorzugsweise gleichartige, Werkzeugeinheiten (16) umfasst.

12. Bodenbearbeitungsgerät (2) nach zumindest einem der vorstehenden Ansprüche, **dadurch gekennzeichnet, dass** das Nachlaufwerkzeug (14a - d) als Bodenwalze ausgeführt ist.

13. Bodenbearbeitungsgerät (2) nach zumindest einem Ansprüche 1 bis 11, **dadurch gekennzeichnet, dass** das Nachlaufwerkzeug (14a - d) als Striegeleinheit mit einer Mehrzahl von Striegeln ausgeführt ist.

## Claims

1. Soil-working apparatus (2) for ultra-shallow soil working, comprising a frame (4) which extends transversely to the direction of travel (F) in the work position and which has at least two work segments (6a - d), a work segment (6a - d) being formed by a sequence of at least two work tools on which the soil-working apparatus (2) is supported, preferably exclusively, during work, at least one work tool being in the form of a leading tool (12a - d) for loosening the soil and/or cutting crop residues and at least one work tool being in the form of a trailing tool (14a - d) following the leading tool (12a - d) in the direction of travel (F) for recompacting the soil and/or leveling the crop residues, **characterized in that** the leading tool (12a - d) and the trailing tool (14a - d) have a rotating, rolling or harrowing mode of operation, transverse to the direction of travel (F), and therefore ensure ultra-shallow soil cultivation, the soil-working apparatus (2) having at least one tensioning device (20) for adjustable distribution of the weight of the soil-working apparatus (2) between the leading tool (12a - d) and the trailing tool (14a - d).

2. Soil-working apparatus (2) according to claim 1, **characterized in that** at least two tensioning devices (20) are provided, that at least one tensioning device (20) is assigned to each work segment (6a - d).

3. Soil-working apparatus (2) according to claim 2, **characterized in that** the tensioning device (20) is arranged between the frame (4) and the leading tool (12a - d).

4. Soil-working apparatus (2) according to at least one of the preceding claims, **characterized in that** the tensioning device (20) is designed to generate an elastic transmission force on at least one work tool, preferably on the leading tool (12a - d), that the weight of the soil-working apparatus (2) is distributed onto the leading tool (12a - d) and the trailing tool (14a - d) depending on the level of the transmission force.

5. Soil-working apparatus (2) according to claim 4, **characterized in that** the tensioning device (20) comprises an adjusting device (100) and an actuator (102) which cooperates with the adjusting device (100) in order to generate the elastic transmission force.

6. Soil-working apparatus (2) according to claim 5, **characterized in that** the adjusting device (100) is in the form of a detachable perforated bracket (100) and/or the actuator (102) is in the form of a spring assembly (102), preferably having at least one depth stop (204).

7. Soil-working apparatus (2) according to at least one of the preceding claims, **characterized in that** the work segments (6a - d) are coupled to one another and/or to the frame (4) by means of hinges having pivot axes (S) pointing in the direction of travel (F).

8. Soil-working apparatus (2) according to at least one of the preceding claims, **characterized in that** a further work tool in the form of a pre-working tool (18) is arranged in front of the leading tool (12a - d) in the direction of travel (F).

9. Soil-working apparatus (2) according to at least one of the preceding claims, **characterized in that** the tensioning device (20) is designed to keep the adjusted distribution of the weight on the leading tool (12a - d) and the trailing tool (14a - d) at least approximately constant when the work depth varies, when an obstacle is encountered, and/or in the event of wear of the leading tool (12a - d) and/or the trailing tool (14a - d).

10. Soil-working apparatus (2) according to at least one of the preceding claims, **characterized in that** the leading tool (12a - d) is in the form of a tandem arrangement.

11. Soil-working apparatus (2) according to claim 9, **characterized in that** the tandem arrangement comprises at least two, preferably identical, tool units (16), each of which is rotatable about an axis of rotation (D) lying transversely to the direction of travel (F).

12. Soil-working apparatus (2) according to at least one of the preceding claims, **characterized in that** the trailing tool (14a - d) is in the form of a soil roller.

13. Soil-working apparatus (2) according to at least one of claims 1 to 11, **characterized in that** the trailing tool (14a - d) is designed as a harrow unit having a plurality of harrows.

## Revendications

1. Appareil de travail du sol (2) pour le traitement ultraplat du sol, comprenant un cadre (4) s'étendant, dans une position de travail, transversalement au sens de déplacement (F) et présentant au moins deux segments de travail (6a - d), dans lequel un segment de travail (6a - d) est formé par une succession d'au moins deux outils de travail sur lesquels s'appuie, de préférence exclusivement, l'appareil de travail du sol (2) pendant le travail, dans lequel au moins un outil de travail est réalisé en tant qu'outil qui avance (12a - d) pour l'ameublissement du sol et/ou la coupe de résidus de récolte et au moins un outil de travail est réalisé en tant qu'outil suiveur (14a - d) suivant l'outil qui avance (12a - d) dans le sens de déplacement (F) pour le rappui du sol et/ou le nivellement des résidus de récolte, **caractérisé en ce que** l'outil qui avance (12a - d) et l'outil suiveur (14a - d) présentent un mode de travail rotatif, à rouleaux ou à herses, transversalement au sens de déplacement (F), de sorte qu'ils garantissent un traitement ultraplat du sol, dans lequel l'appareil de travail du sol (2) comprend au moins un dispositif de serrage (20) pour la répartition réglable du poids de l'appareil de travail du sol (2) entre l'outil qui avance (12a - d) et l'outil suiveur (14a - d).

2. Appareil de travail du sol (2) selon la revendication 1,
**caractérisé en ce qu'**au moins deux dispositifs de serrage (20) sont prévus,
**en ce qu'**au moins un dispositif de serrage (20) est associé à chaque segment de travail (6a - d).

3. Appareil de travail du sol (2) selon la revendication 2,
**caractérisé en ce que** le dispositif de serrage (20) est disposé entre le cadre (4) et l'outil qui avance (12a - d).

4. Appareil de travail du sol (2) selon au moins l'une des revendications précédentes, **caractérisé en ce que** le dispositif de serrage (20) est conçu pour générer une force de transmission élastique sur au moins un outil de travail, de préférence sur l'outil qui avance (12a - d), **en ce que** le poids de l'appareil de travail du sol (2) est réparti entre l'outil qui avance (12a - d) et l'outil suiveur (14a - d) en fonction de l'importance de la force de transmission.

5. Appareil de travail du sol (2) selon la revendication 4,
**caractérisé en ce que** le dispositif de serrage (20) comprend un dispositif de réglage (100) et un actionneur (102) coopérant avec le dispositif de réglage (100) pour la génération de la force de transmission élastique.

6. Appareil de travail du sol (2) selon la revendication 5,
**caractérisé en ce que** le dispositif de réglage (100) est réalisé sous forme de coulisse à trous (100) enfichable et/ou l'actionneur (102) est réalisé sous forme de groupe de ressorts (102), de préférence comportant au moins une butée de profondeur (204).

7. Appareil de travail du sol (2) selon au moins l'une des revendications précédentes, **caractérisé en ce que** les segments de travail (6a - d) sont accouplés entre eux et/ou au cadre (4) au moyen de charnières présentant des axes de pivotement (S) orientés dans le sens de déplacement (F).

8. Appareil de travail du sol (2) selon au moins l'une des revendications précédentes, **caractérisé en ce que**, dans le sens de déplacement (F), un autre outil de travail, réalisé sous forme d'outil de prétraitement (18), est disposé avant l'outil qui avance (12a - d).

9. Appareil de travail du sol (2) selon au moins l'une des revendications précédentes, **caractérisé en ce que** le dispositif de serrage (20) est conçu pour maintenir, de manière au moins approximativement constante, la répartition réglée du poids entre l'outil qui avance (12a - d) et l'outil suiveur (14a - d) en cas de variation de la profondeur de travail, de rencontre d'un obstacle et/ou d'usure de l'outil qui avance (12a - d) et/ou de l'outil suiveur (14a - d).

10. Appareil de travail du sol (2) selon au moins l'une des revendications précédentes, **caractérisé en ce que** l'outil qui avance (12a - d) est réalisé sous forme d'agencement en tandem.

11. Appareil de travail du sol (2) selon la revendication 9,
**caractérisé en ce que** l'agencement en tandem comprend au moins deux unités d'outils (16), de préférence de même type, pouvant respectivement tourner autour d'un axe de rotation (D) situé transversalement au sens de déplacement (F).

12. Appareil de travail du sol (2) selon au moins l'une des revendications précédentes, **caractérisé en ce que** l'outil suiveur (14a - d) est réalisé sous forme de rouleau pour sol.

13. Appareil de travail du sol (2) selon au moins l'une des revendications 1 à 11, **caractérisé en ce que** l'outil suiveur (14a - d) est réalisé sous forme d'unité à herses comportant une pluralité de herses.
